# EUROPÄISCHE PATENTANMELDUNG

(11) **EP 4 660 105 A1**
(43) Veröffentlichungstag der Anmeldung: **10.12.2025**
(21) Anmeldenummer: 25000045.2
(22) Anmeldetag: 29.04.2025
(51) Int. Cl.: B65G 1/00, B65G 59/00, B65G 59/02, B65G 47/82

(54) **SCHUBDEPALETTIERER**

(30) Priorität: 06.06.2024 IT 202400013015
(71) Anmelder: Tanzer Maschinenbau Srl, 39011 Lana (BZ) (IT)
(72) Erfinder: Gitterle, Christof, I-39020 Kastelbel Tschars (BZ) (IT); Mantinger, Martin, I-39010 Nalles (Bz) (IT); Tanzer, Peter, I-39011 Lana (BZ) (IT); Ungerer, Thomas, I-39011 Lana (BZ) (IT)
(74) Vertreter: Oberosler, Ludwig

(57) **Zusammenfassung**

Schubdepalettierer für Paletten (P) bestehend:

- aus einem Rahmen (1b) welcher eine Positionierungsvorrichtung (A) mit Ladefläche (3) und mit Transfermitteln (4) trägt,

- aus einer nach der Positionierungsvorrichtung (A) angeordneten Anhebevorrichtung (B) umfassend eine Auflagefläche (7), aus einer Schubvorrichtung (C) umfassend einen Schubrahmen (6) mit Schubbalken (6a) und Stützrahmen (6b) welcher, mittels Motor (6m) längs seitlich am Rahmen (1b) des Depalettierers befestigten Führungen, über die Positionierungsvorrichtung (A) hinweg, bewegt (6h) wird und

- aus einer Abstützvorrichtung (D) umfassend zwei Abstützeinheiten (9) welche je von einem Motor (9n) über Übertragungsmittelentlang Führungen (9e) am Rahmen (1c) eines, nach der Auflagefläche (7) angeordneten, Transfermittels (8) bewegt (9h) werden, wobei

- die Ladefläche (3) zusammen mit den entsprechenden Transfermitteln (4) der Positionierungsvorrichtung (A), bezogen auf den Rahmen (1b) des Depalettierers, vertikal verstellbar (4v) ist und an der, der Zuführseite gegenüberliegenden, Seite mit vertikal bewegbaren (5v) Anschlägen (5) ausgestattet ist, wobei

- die mit dem Rahmen (1b) verbundene Auflagefläche (7) der Anhebevorrichtung (B) mit mindestens zwei Keilen (7a) ausgestattet ist welche verfahrbar (7h) in Führungsrillen (7c) gelagert sind so dass ihre obere Fläche komplanar mit der Auflagefläche (7) ist und welche gegen die Depalettierrichtung (6h) bewegt werden und wobei

- die Führungsschienen (9e) für die Abstützeinheiten (9) der Abstützvorrichtung (D) sich über die gesamte Länge in Richtung des Transfers (6h, 8h) der Last (L, L1-L4), der Auflagefläche (7) und des anschließenden Transfermittels (8) erstrecken.

## Beschreibung

Die Erfindung bezieht sich auf einen Schubdepalettierer um Paletten welche mit, am Umfang angeordneten, Rückhaltevorsprüngen versehen sind von der Last, bestehend z.B. aus gestapelten Behältern, zu befreien.

Es sind Schubdepalettierer bekannt welche geeignet sind um die Palette ihrer gesamten Last, bestehend aus einem einzigen Stück oder aus mehreren gestapelten Stücken welche einen einzigen Stapel oder mehrere zusammengruppierte Stapel bilden, zu befreien oder um die Palette eines Teiles der Last zu befreien indem hintereinander immer die horizontale Schicht oder auch mehrere Schichten am oberen Stapelende verschoben werden. Diese besagten Depalettierer bewegen einen Balken parallel zur Ladefläche der Palette gegen den unteren Bereich der Last in Richtung einer Ebene oder eines Transfermittels welche in der selben Ebene der Ladefläche der Palette, bzw. in der Ebene der zu verschiebenden Schicht der gestapelten Last, liegt wobei die Last auf der Palette oder auf dem darunterliegenden Teil der auf der Palette zurückgehaltenen Last verschoben wird. Diese Depalettier-Abläufe sind nur im Fall von Paletten ohne, an deren Umfang vorgesehenen, Rückhaltevorsprünge durchführbar, da diese das Gleiten der Last auf der Ladefläche der Palette verhindern würden.

Aus der EP 3766812 A1 ist ein Schubdepalettierer mit Transfervorrichtung und die Aufteilung der depalettierten Last bekannt. Dieser Depalettierer besteht wesentlich aus einer Transfer- und Positionierungsvorrichtung auf welche an einer Seits die beladenen Paletten geladen werden und an der gegenüberliegenden Seite die entladenen Paletten abgeführt werden, aus einer Vorrichtung mit einem zur Laderichtung der Paletten quer beweglichem Schubbalken und aus einer Auflagefläche auf welche die Last geschoben wird um anschließend auf Transfermittel geschoben zu werden. Der besagte Depalettierer ist ausschließlich für Lasten einsetzbar welche auf Paletten ohne Rückhalterand gelagert sind. Die Lasten können somit direkt horizontal von der palette auf die Auflagefläche geschoben werden. Die besagte Auflagefläche muss während der Schubfase in der selben Ebene der Ladefläche der Palette liegen. Um diese zu erreichen sind die Transfermittel für die beladenen Paletten vertikal verstellbar um die zu entladende Palette, unabhängig von ihrer Höhe, immer mit ihrer Ladefläche auf dem Niveau der Auflagefläche positionieren zu können. Dieser Depalettierer ist nicht mit Mitteln ausgestattet um die Last von der Ladefläche der Palette anheben zu können so dass diese unter Schubwirkung den Rückhalterand welcher an manchen Paletten vorgesehen ist überwinden könnte.

In mehreren Anwendungsbereichen hat sich, aus Gründen der Hygiene, der Lagerung und der hohen Wiederverwendungszeiten, der Einsatz von Paletten aus Kunststoff verbreitet welche im Umfangsbereich der Ladefläche oft mit nach oben abstehenden Rückhalterändern ausgestattet sind um die Last während des Transportes und der Lade-/Entladefasen auf der Palette zu sichern. Die besagten Rückhalteränder verhindern das Gleiten der Last auf der Ladefläche dieser Paletten und somit auch das Depalettieren mittels Schubdepalettierer.

Die Erfindung stellt sich die Aufgabe einen Schubdepalettierer zu schaffen um die mit einem Rückhalterand versehenen Paletten ihrer, aus einem einzigen Stück oder Stapel oder aus mehreren Stücken oder gruppierten Stapeln, bestehenden Last zu befreien.

Zur Lösung dieser Aufgabe schlägt die Erfindung vor, die Auflagefläche der Maschine auf welche die Last, um die Palette frei zu machen, während der Schubfase auf bekannte Weise vom Schubbalken geschoben wird, mit beweglichen Keilen auszustatten welche gegen die Schubrichtung in den Bereichen welche frei vom Rückhalterand sind, zwischen der Ladefläche der Palette und der Grundfläche der Last, eingeschoben werden um, auf der Seite wo die Keile wirken, das Anheben der Last über die Höhe des Rückhalterandes zu erreichen so dass die Last auf den, in die besagte Auflagefläche integrierten, Keile gleitend verschoben werden kann. Dabei ist auf bekannte Weise nach der Auflagefläche ein Transfermittel angeordnet. Damit die Keile genau auf der Höhe zwischen Palette und Last eingeschoben werden können sind die auf der Ladefläche der Positionierungsvorrichtung vorgesehenen Fördermittel oder die gesamte Lade- und Positionierungsfläche, mit oder ohne Fördermittel, vertikal um mehr als die Höhe des Rückhalterandes (von 5 bis 10mm) der Paletten und mehr als die höchste Differenz der Höhe (von 130 bis 170mm) der unterschiedlichen Palettenmodelle verstellbar. Um eine Beschädigung der Paletten und/oder der Last während des Einschiebens der Keile zu vermeiden, werden diese in einer ersten Fase mit einer bescheidenen Kraft beaufschlagt und nur wenn, während dieser ersten Fase, die Keile teilweise eindringen ohne dass sie einem Widerstand begegnen welche höher als die ausgeübte bescheidene Kraft ist weil sie weder gegen die Palette noch gegen die Last wirken, bewirkt eine Sonde welche die besagte Einschubbewegung erhebt, das Steigern der Schubkraft um durch das weitere Eindringen der Keile das Anheben der Last über die Höhe des vorderen Rückhalterandes der Palette zu erreichen. Wenn hingegen die Keile, während der ersten Fase ihrer Betätigung, sich nicht in der exakten Position entsprechend der Ladefläche der Palette befinden und somit gegen die Palette oder die Last bewegt werden, bewirkt dies dass keine Eindringbewegung erhoben wird und dass eine Korrektur in vertikaler Richtung der Ladefläche der Positionierungseinrichtung erfolgt um anschließend die Wiederholung der Bewegung der Keile durchzuführen.

Die Erfindung schließt nicht aus, dass die Lade- und Positionierungsfläche, bzw. deren Transfermittel, nicht vertikal verstellbar sind und dass alternativ dazu die besagte Vertikalbewegung zwecks Positionierung die Keilenden entsprechend der Ladefläche der Paletten von der, nach der Positionierungsvorrichtung angeordneten, mit den Keilen ausgestatteten, Auflagefläche ausgeführt wird.

Um zu verhindern dass die Palette, infolge Positionierung des Schubbalkens im unteren Bereich der zu bewegenden Last, während des Einschiebend der Keile, verschoben wird, ist der Schubbalken der erfindungsgemäßen Maschine an beiden Endbereichen auf der unteren Seite mit mindestens zwei vertikal, z.B. durch Hydraulikzylinder, verstellbaren Anschlägen ausgestattet, so dass diese eine Auflage für die Palette und die hintere Fläche der Last bilden. Die besagten Anschläge werden, nach Eindringen der Keile, zurückgezogen so dass der Schubbalken ausschließlich gegen die, an der Vorderseite durch die Keile angehobene, Last und nicht gegen die Palette wirken kann. Die Erfindung schließt nicht aus, dass die besagte Wirkung der Anschläge gegen die Palette während der Eindringfase der Keile durch eine vertikal, z.B. mechanisch, verstellbaren Schubbalken erreicht wird welcher eine entsprechende Höhe hat um während des Einschiebens der Keile, sei es auf die Palette, als auch auf die Last zu wirken. Alternativ wird nicht ausgeschlossen an der Lade- und Positionierungsfläche, entsprechend der hinteren Seite der Palette, zwei vertikal ausfahrbare Anschläge vorzusehen um ein Verschieben der Palette während des Einschiebens der Keile zu vermeiden.

Vorteilhafterweise ist erfindungsgemäß, zwecks Stabilisierung der Last während des Einschiebens der Keile und/oder während des Verschiebens der Last auf der Palette, während des Gleitens der Last auf der mit Keilen ausgestatteten Auflagefläche, während des Verschiebens und der eventuellen Handhabung der Last, entlang des folgenden Transfermittels und während des Verschiebend von diesem auf ein eventuelles anschließendes, quer zum ersten wirkendes Transfermittels, eine Abstützvorrichtung vorgesehen welche längs der, mit Keilen ausgestatteten, Auflagefläche und dem bekannten, nach der Auflagefläche angeordneten, Transfermittel für die Last wirkt. Die besagte Abstützvorrichtung besteht aus zwei von spezifischen Motoren, über Mittel zur Bewegungsübertragung, angetriebenen Abstützeinheiten welche an beiden Längsseiten der Auflagefläche und des folgenden Transfermittels vorgesehen sind. Jede der besagten Abstützeinheiten besteht aus einem, längs Führungsschienen beweglichen, Laufwagen und einem in den Durchlaufsbereich der Last ragenden, gemäß einer vertikalen Achse durch Motor betriebenen Arm. Der besagte schwenkbare Arm welcher eine Länge hat um in den Durchlaufbereich der depalettierten Lasten, eventuell auch über die Mittellinie hinaus, zu ragen weist am freien Ende einen vertikalen Abstützbalken auf dessen Länge ungefähr der Höhe der bearbeitbaren Lasten entspricht. Diese Abstützeinheiten sind einsetzbar für:
- das, gemäß der Depalettierrichtung, seitliche Abstützen der Last während deren Anheben und das Verschieben, während deren Gleiten auf der mit Keilen ausgestatteten Auflagefläche;
- das hintere Abstützen der Last während des Trennens gruppierter Lasten entlang des Transfermittels welches nach der Auflagefläche angeordnet ist;
- die Handhabung der Lasten, wobei eventuell auch deren Drehung gemäß ihrer vertikalen Achse erfolgt, wobei auf eine der vertikalen Kanten der Last die vom Transfermittel vermittelte Bewegung gebremst oder beschleunigt wird;

- das Ausrichten der gestapelten Stücke welche die Last bilden, indem mit einem der Abstützbalken gegen eine der vier Seiten des Stapels und eventuell mit einem zweiten Abstützbalken an der Gegenseite agiert wird;
- das Überwechseln der Last, bzw. der einzelnen Lasten, welche sich infolge Trennung der auf einer einzigen Palette gruppierten Lasten ergeben, auf ein Transfermittel welches quer zum Transfermittel wirkt und welches nach der mit Keilen ausgestatteten Auflagefläche angeordnet ist.

Der erste Ausrichtungsvorgang an den Oberflächen der Last, welche gemäß der Depalettierrichtung ausgerichtet sind, erfolgt während diese sich, zusammen mit der Palette, auf der Positionierungsvorrichtung befindet, indem die Abstützbalken in Gegenrichtung quer zur Depalettierrichtung wirken. Insbesondere das Trennen mehrerer gruppierter Lasten, z.B. mehrerer Stapel auf einer einzigen Palette, erfolgt indem mittels dem Schubbalken die Last über die mit Keilen versehene Auflagefläche geschoben wird bis der erste Stapel, das erste Stapelpaar oder die erste Reihe von Stapeln vollständig auf dem anschließenden Transfermittel aufliegt. Anschließend kann der besagte Stapel, das Stapelpaar oder die Stapelreihe vom besagten Transfermittel vom Rest der, noch auf der Auflagefläche verweilenden, Last entfernt werden um mit den Abstützeinheiten, durch Schwenken der vertikalen Abstützbalken, gegen die hinteren Flächen der besagten Stapel zu wirken und diese während ihres Transports entlang des Transfermittels zu begleiten und um deren Überwechseln auf ein anschließendes, eventuell quer zum ersten Transfermittel angeordnetes, Transfermittel zu verursachen.

Die Erfindung wird anhand eines vorzuziehenden Ausführungsbeispiels eines, in den beigelegten Zeichnungen schematisch dargestellten, erfindungsgemäßen Schubpalettierers näher erklärt, dabei erfüllen die Zeichnungen rein erklärenden, nicht begrenzenden Zweck.

Die Fig. 1 zeigt die Draufsicht auf einen erfindungsgemäßen Schubdepalettierer mit beweglichen Abstützeinheiten und einem Transfermittel für den Transport der depalettierte Last quer zur Auslaufrichtung aus der Maschine.

Die Fig. 2 zeigt den in Fig. 1 dargestellten Schubdepalettierer in perspektivischer Darstellung.

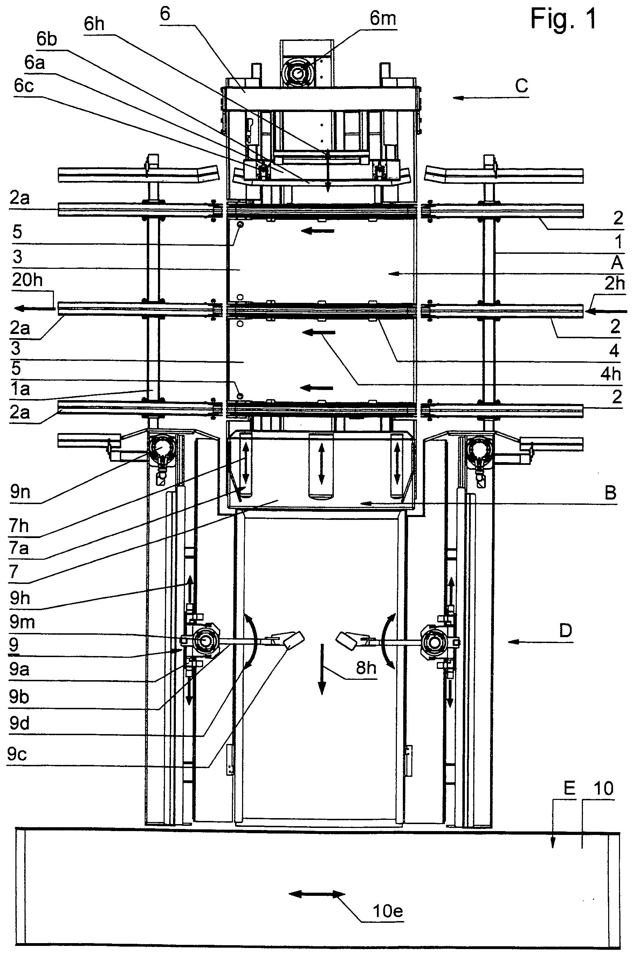

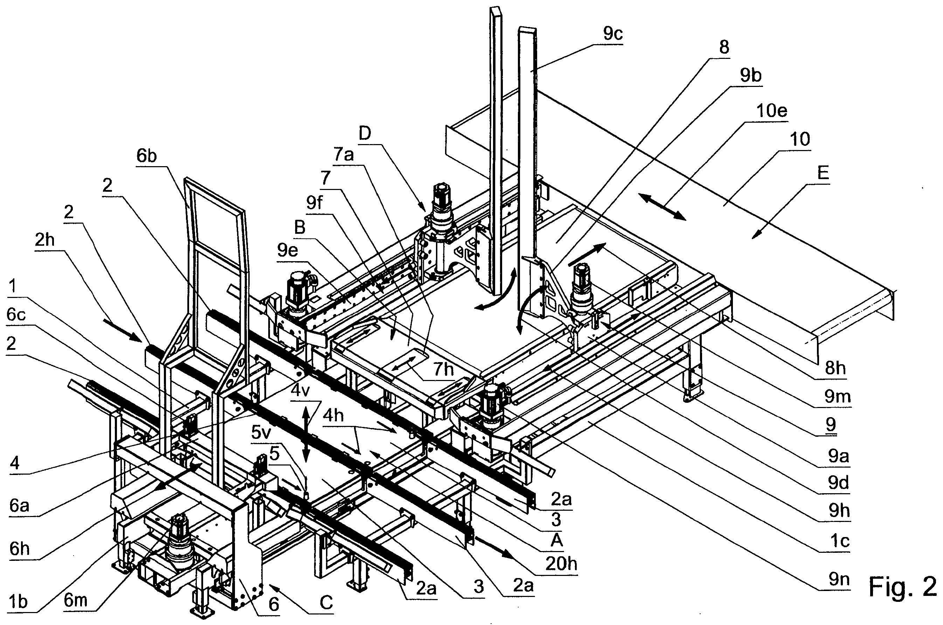

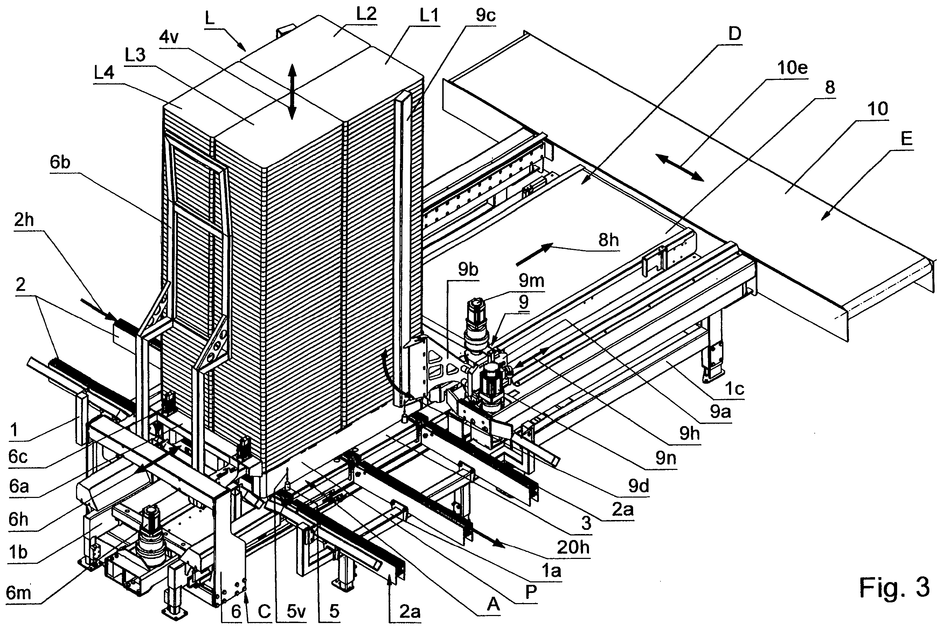

Die Fig. 3 zeigt in perspektivischer Darstellung den, in den Fig. 1 und 2 dargestellten, Depalettierer mit einer mit Rückhalterand versehener Palette und einer Last bestehend aus vier Stapel von zugeklappten Steigen, in gruppierter Anordnung auf der vertikal verstellbaren Lade- und Positionierfläche, welche an einer Seite mit bekannten Transfermitteln für die Zufuhr und an der Gegenseite mit Transfermittel für die Abfuhr der entleerten Paletten versehen ist, mit der Last in Position um das Depalettieren zu beginnen und mit dem beweglichen Abstützeinheiten mit den vertikalen Abstützbalken in, seitlich an der Last anliegenden, Position.

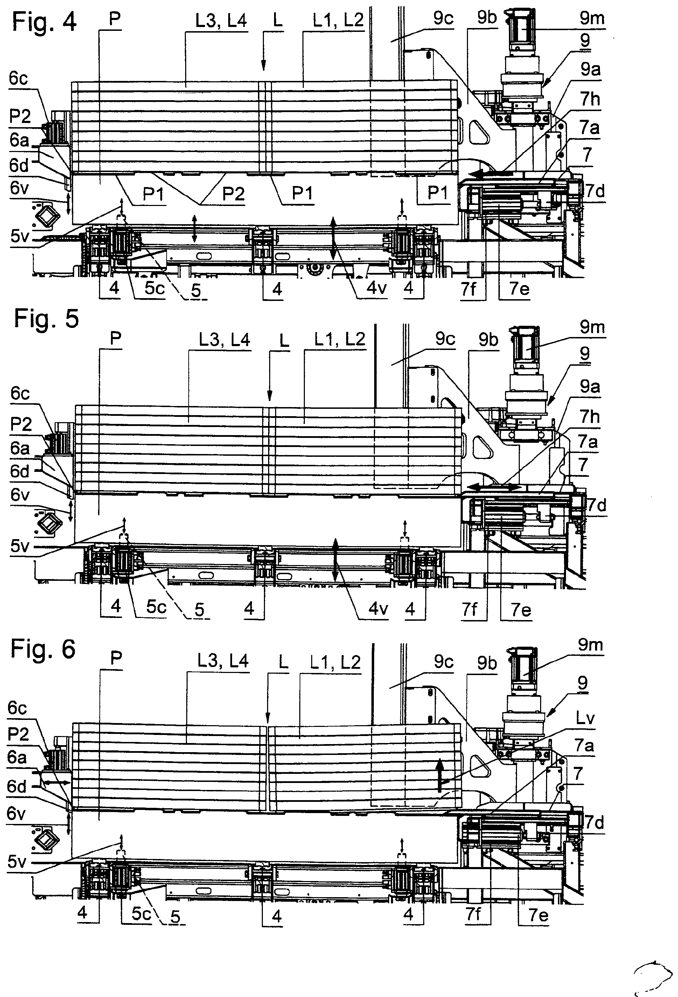

Die Fig. 4 zeigt eine Schnittdarstellung gemäß einer Schnittebene quer durch den in den Fig. von 1 bis 3 gezeigten Depalettierer und komplanar mit der hinteren Fläche der Palette und der hinteren Oberfläche der entsprechenden Last samt Palette welche auf der, mit Transfermitteln versehenen, Lade- und Positionierfläche positioniert ist, mit den am Schubbalken vorgesehenen Anschlägen in ausgefahrener Position und mit der Lade- und Poisitionierfläche in zu hoher Position, gegenüber der anschließenden, mit Keilen versehenen Auflagefläche, um das Einschieben der Anhebe-Keile durchführen zu können.

Die Fig. 5 zeigt die selbe, in Fig. 4 dargestellte, Schnittdarstellung durch den Depalettierer mit der vertikal bewegbaren Lade- und Positionierfläche in angehobener Position mit der Ladefläche der Palette auf der Höher der freien Enden der Anhebe-Keile und mit den am Schubbalken angebrachten Anschlägen in, hinten gegen die Palette anliegender, ausgefahrener Position.

Die Fig. 6 zeigt die selbe in den Fig. 5 und 5 dargestellten Schnittdarstellung mit den Anhebe-Keilen in Einschubfase zwischen Palette und Last und mit den, am Schubbalken angebrachten, Anschlägen in ausgefahrener Position.

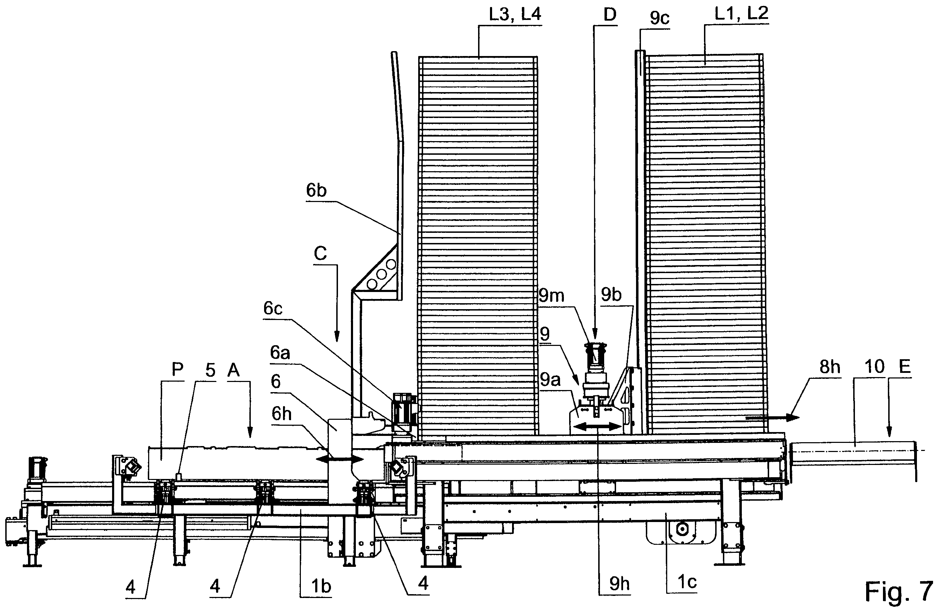

Die Fig. 7 zeigt die Seitenansicht des in den von Fig. 1 bis 3 dargestellten Depalettierers mit dem vorderen Teil der Last bestehend aus zwei benachbart anliegenden Stapeln von zugeklappten Steigen welche mittels eines ersten Transfermittels, nach der mit Anhebe-Keilen versehenen Auflagefläche, bewegt worden sind und mit den Abstützeinheiten mit den vertikalen Abstützbalken an den hinteren Flächen der besagten Stapel anliegend, um diese in Richtung eines zweiten Transfermittels zu bewegen welches quer zum ersten angeordnet ist, während der hintere Teil der Last, bestehend aus zwei Stapel zusammengeklappter Steigen, auf der mit Anhebe-Keilen versehenen Auflagefläche bereitsteht um ihrerseits, mittels dem Schubbalken, auf das anschließende Transfermittel geschoben zu werden.

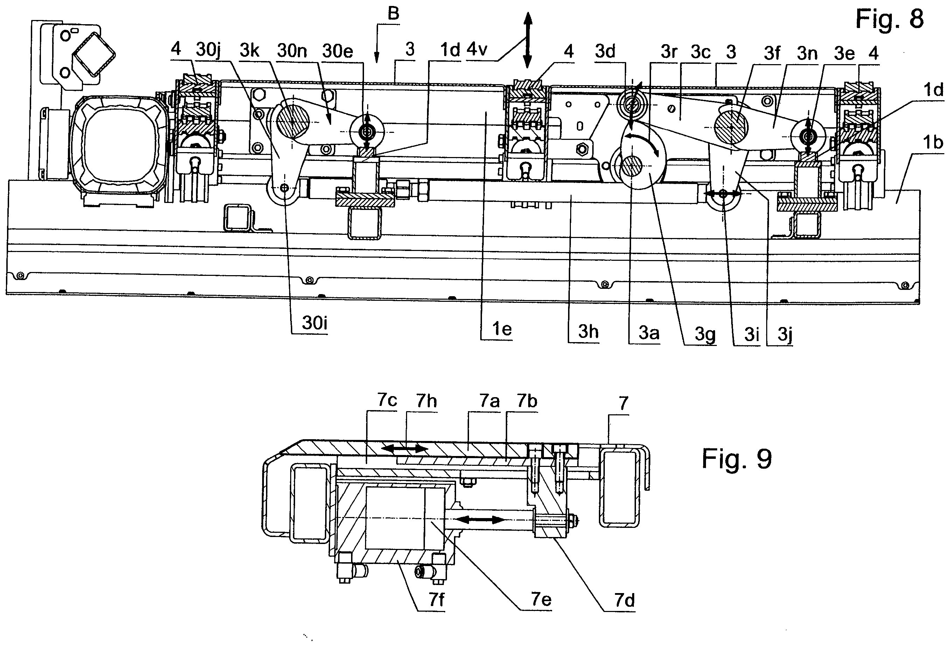

Die Fig. 8 zeigt eine Schnittdarstellung durch den Hebemechanismus der, mit Transfermitteln versehenen, Lade- und Positionierungsfläche gemäß einer vertikalen, quer zu den besagten Transfermitteln verlaufenden, Schnittebene.

Die Fig. 9 zeigt eine Schnittdarstellung der Lagerung der, an der Auflagefläche vorgesehenen, Anhebe-Keile und deren Antrieb mittels pneumatischem Zylinder.

Der Depalettierer besteht wesentlich aus:
- einer Positioniervorrichtung A für die Paletten P mit Last L welche einerseits auf bekannte Weise mittels einer Zuführvorrichtung, bestehend aus einem Kettenförderer 2 mit Rahmen 1 und an der Gegenseite mit einer Vorrichtung verbunden ist welche aus einem Kettenförderer 2a und einem Rahmen 1a für die Abfuhr der leeren Paletten P infolge Depalettierung besteht;
- einer Hebe- und Auflagevorrichtung B für die depalettierte Last;
- einer Schubvorrichtung C;
- einer Abstützvorrichtung D, auf welche eventuell eine Transfereinrichtung E für die depalettierte Last L oder aufgeteilte Last L!, L2, L3, L4 folgt.

Der Positioniervorrichtung A mit Rahmen 1b werden einerseits auf bekannte Weise, mit Rückhalterand P2 versehenen, Paletten P mittels eines Ketten- oder Riemenförderers 2 zugeführt 2h welche mit einer einzigen Last L oder einer gruppierten Last L!, L2, L3, L4 beladen sind, während auf der Gegenseite auf bekannte Weise mittels eines bekannten, eventuell mit dem ersten Transfermittel identischen, Transfermittel 2a mit Rahmen 1a die depalettierten Paletten P abgeführt 2a werden. Die besagte Positionierungsvorrichtung A umfasst eine mit Förderketten 4 oder anderen bekannten Transfermitteln ausgestattete Ladefläche 3 welche mit den Zuführmitteln 2 und den Abführmitteln 2a in einer Linie ausgerichtet sind. Die Ladefläche 3 ist, zusammen mit den entsprechenden Transfermitteln 4, durch einen starren Rahmen 1e verbunden welcher mit einem Mechanismus für das vertikale Anheben/Absenken 4v, bezogen auf den Rahmen 1b der Positionierungsvorrichtung A, ausgestattet ist. Der besagte Mechanismus für das vertikale Anheben/Absenken besteht aus einer vom Motor angetriebenen 3r Welle 3a welche mittels mindestens einer Nocke 3g auf das Ende 3d eines Arms 3c wirkt welcher in entsprechender Position von einer drehbar gelagerten Welle 3f absteht von welcher in entgegengesetzter Position Arme 3n abstehen deren freie, mit Kugelgelenk 3e ausgestatteten, Enden mit, am starren Rahmen 1b der Positionierungsvorrichtung A vorgesehenen, Halterungen 1d verbunden sind. Die Drehbewegung 3r der besagten Welle 3f welche am Rahmen 1e der Ladefläche, parallel zur Welle 3a mit Nocken 3g, gelagert ist, wird von mindestens einem, von der selben Welle 3f abstehenden, Arm 3j übertragen, wobei die Welle mit ihrem freien, mit Kugelgelenk 3i ausgestatteten, Ende mit einer in der Länge verstellbaren Stange 3h verbunden ist, welche mit dem entgegengesetzten Ende am Kugelgelenk 30i eines von einer Welle 3k abstehenden Armes 30j gehaltert ist, welche am Rahmen 1e, parallel zur Welle 3a mit Nocke 3g, gelagert ist. Von der selben Welle 3k stehen mindestens zwei Arme 30n ab welche mit den entsprechenden Kugelgelenken 30e auf die mit dem Rahmen 1b verbundenen Halterungen 1d wirken. Die mit dem Rahmen 1b der Positionierungsvorrichtung A verbundenen Halterungen 1d, an welchen die Kugelgelenke 3e und 30e festgelegt sind, sind vorzugsweise vier und an den Eckbereichen des Rahmens 1e der mit Transfermitteln 4 ausgestatteten Ladefläche 3 vorgesehen. Natürlich könnten die an den Halterungen 1d des Rahmens 1b festgelegten Kugelgelenke 3e, 30e durch einfache Lagerungen ersetzt werden welche die Bewegung der verbundenen Elemente in einer einzigen Ebene gestatten. Die Erfindung schließt nicht aus, dass der besagte Mechanismus für die vertikale Bewegung mit relativ bescheidenem Hub der Ladefläche 3, gegenüber dem Rahmen 1b der Positionierungsvorrichtung A, durch einen Mechanismus mit Gewindestange, Zahnstange, Keile oder durch hydraulische oder pneumatische Zylinder ersetzt wird. Die Ladefläche 3 weist an der, der Zuführseite entgegengesetzten, Seite zwei pneumatisch vertikal bewegbare 5v Anschläge 5 auf welche die Funktion eines Anschlages ausüben um die Position der, mittels Kettenförderer 4 der Positionierungsvorrichtung A bewegten 4h, Palette P zu definieren. Weiters schließt die Erfindung nicht aus, dass nur die Ladefläche 3 angehoben/abgesenkt wird während die Kettenförderer 4 fest mit dem Rahmen1b der Positionierungsvorrichtung A verbunden sind oder dass die besagten Kettenförderer 4 angehoben/abgesenkt werden, während die Ladefläche 3 feststehend vom Rahmen 1b getragen wird.

Die nach der Positionierungsvorrichtung A angeordnete Hebevorrichtung B mit Auflagefläche 7 dient um die Last L an der Vorderseite, bezogen auf die anschließende Depalettierverschiebung 6h, von der Palette P anzuheben Lv welche einen umlaufenden, nach oben vorstehenden Rückhalterand P2 aufweist welcher von Abschnitten P1 ohne Rand unterbrochen ist. Um das genannte Anheben Lv über den umlaufenden Rand P2 der Palette P zu erreichen sind erfindungsgemäß bewegbare 7h Keile 7a vorgesehen welche, entsprechen der Abschnitte P1 ohne Rand wirken und zueinander parallel auf der bekannten, für das Überwechseln 6h der Last L auf ein folgendes Transfermittel, z.B. ein Transportband 8, Auflagefläche 7 gelagert sind. Die besagten Keile 7a sind in der Auflagefläche 7 komplanar mit dieser mittels Gleitschuh 7b zwischen Führungen 7c verschiebbar 7h gelagert. Der, bezogen auf das Keilende, entgegengesetzte Endbereich der Keile 7a ist mittels eines Verbindungselements 7d mit dem Ende eines, in einem Zylinder 7f laufenden, pneumatisch bewegten, an der unteren Struktur der Auflagefläche 7 befestigten, Kolben 7e verbunden. Die Position der Keile 7a auf der Auflagefläche 7 muss natürlich den vom Rückhalterand P2 freien Bereichen P1 auf der Palette P entsprechen.

Die Erfindung schließt nicht aus, dass die Ladefläche 3 der Positionierungsvorrichtung A und/oder die entsprechenden Transfermittel 4 feststehend sind und dass die Auflagefläche 7 zusammen mit den Keilen 7a vertikal verstellbar ist um mit den besagten Keilen auf der Höhe der Ladefläche der, auf der Positionierungsvorrichtung liegenden, Palette P wirken zu können.

Die Schubvorrichtung C ist vor der Positionierungsvorrichtung A angeordnet und wirkt 6h quer zu den Bewegungen für die Zufuhr 2h, die Positionierung 4h und die Abfuhr 20h der Paletten P. Sie besteht aus einem Schubrahmen 6 welcher auf, mit dem festen Rahmen 1b der Positionierungsvorrichtung A verbundenen, Führungen auf bekannte Weise vom Motor 6m mittels Zahnriemen oder Ketten bewegbar 6h ist. Der besagte Schubrahmen 6 ist in Richtung der Positionierungsvorrichtung A auf bekannte Weise mit einer horizontalen Schubstange 6a, welche etwas höher als die Ebene angeordnet ist die sich über die oberen Enden der Vorsprünge P2 des Rückhalterandes der Paletten P erstreckt und mit einem vertikalen Stützrahmen 6b versehen ist. Erfindungsgemäß ist an der Schubstange 6a, an beiden Enden, ein nach unten vorstehender Anschlag 6d vorgesehen welcher mittels Pneumatikzylinder 6c vertikal in eine aktive Position bewegt werden kann um der Palette P, während des Einschiebens 7h der Keile 7a welches das Anheben Lv der Last L an der, der Auflagefläche 7 zugekehrten, Seite bewirkt, eine Auflage zu bieten, sowie in eine passive zurückgezogene Position bewegt werden kann um, während der Depalettier-Schubbewegung 6h nicht auf die Palette P zu wirken. Die Schubstange 6a, der vertikale Stützrahmen 6b und die Anschläge 6d wirken alle in der selben vertikalen Ebene. Die Erfindung schließt nicht aus, dass die Rückhaltewirkung der Palette P während des Einschiebens 7h der Keile 7a, der Schubstange 6a zugeteilt wird welche in diesem Fall vertikal bewegbar ist so dass sie, während der Bewegung 7h der Keile 7a, sei es die Palette P als auch die Last halten kann, hingegen nimmt sie während der DepalettierBewegung 6h eine angehobene Position ein um nicht gegen di Palette P, sondern ausschließlich auf die Last zu wirken. Alternativ kann die besagte Rückhaltwirkung auf die Palette P, während des Einschiebens 7h der Keile 7a zwischen Palette und Last auch dadurch erreicht werden dass an der Ladefläche 3 vertikal bewegbare Anschläge vorgesehen werden.

Die Abstützvorrichtung D für die auf einer einzigen Palette P gruppierten Lasten L1- L4 ist nach der Hebevorrichtung B angeordnet und besteht aus einem Transfermittel, beispielsweise aus einem Transportband 8, zwecks Transfer 8h der depalettierten Last L in Richtung eines eventuellen Transfermittels E welches quer zum Förderband 8 wirkt und aus zwei Abstützeinheiten 9 welche auf, mit dem Rahmen 1c des Transfermittels mit Förderband 8 verbundenen Führungen 9e an beiden Längsseiten des Förderbandes 8 verfahrbar 9h sind und auf bekannte Weise über ein Übertragungsmittel, z.B. einen Zahnriemen 9f und einem Motor 9n, bewegt 9h werden. Die besagten Abstützeinheiten 9 bestehen aus einem Laufwagen 9a mit einem über das Transportband 8 in Richtung der Lasten abstehenden, Arm 9b welcher um eine vertikale Achse schwenkbar ist. Der besagte Arm 9b wird von einem Motor 9m bewegt welcher auf dem Laufwagen 9a aufgebaut ist und weist an seinem freien Ende einen vertikalen Abstützbalken 9c auf, dessen Höhe ca. der maximalen Höhe der depalettierbaren Last L entspricht. Die Abstützvorrichtung übt eine Stützwirkung aus indem sie, während der Anhebefase Lv, seitlich auf die Last L, während des Einführens 7h der Keile 7a und während des Transfers 6h der Last, bzw. des ersten Teiles der Last L1, L2, auf der Anhebevorrichtung B (Fig. 3), sowie im Fall einer gruppierten Last L1-L4, wirken indem sie auf die Rückseite der Teillast L1, L2 (Fig. 7), bzw. L3, L4, während des Transfers 8h, entlang des Förderbandes 8 wirken und insbesondere um die Teil- oder Gesamtlast, währen des Überwechselns vom Ende des Förderbandes 8 auf das Band 10 einer eventuellen quer angeordneten Transfervorrichtung E oder auf ein anderes Transfermittel abzustützen und zu schieben. Die besagten Abstützeinheiten 9 können erfindungsgemäß mit Armen ausgestattet sein welche über die Mittellinie der Auflagefläche 7 und des anschließenden Transfermittels 8 hinausragen und können, indem sie in vertikaler Richtung, mit oder gegen dessen Bewegungsrichtung 8h wirken, für das Ausrichten der gestapelten Teile einer Last genutzt werden, weiters können sie durch Wirken in einem der Eckbereiche der Lasten diese um eine vertikale Achse drehen.

Der durch die erfindungsgemäße Depalettiervorrichtung durchgeführte Depalettierung umfasst folgende Fasen:
1- Transfer 2h der Palette P samt Last L in Richtung Positioniervorrichtung A;
2- Transfer 4h der Palette P samt Last L auf die Ladefläche 3 und Positionierung gegen die beweglichen 5v ausgefahrenen Anschläge 5 welche als Endanschläge wirken;
3- Bewegen 6h des Schubbalkens 6a mit den ausgefahrenen beweglichen Anschlägen 6b in Richtung Palette P mit Last, dabei ist Schubbalken 6a in einer Position knapp oberhalb der horizontalen Ebene welche sich über das obere Ende des Rückhalterandes P2 der Palette P erstreckt so dass er gegen die Rückseite der Last L aufliegt während die ausgefahrenen Anschläge 6d an der Palette P anliegen;
4- Einstellung in vertikaler Richtung durch Anheben/Absenken der Ladefläche 3, bzw. der Kettenförderer 4 oder beider Einrichtungen, um die Eindringkante der Keile 7a in eine Position zu bringen welche der Ladefläche der Palette P;
5- Bewegen 9h der beiden Abstützeinheiten 9 in Richtung seitlich zur Auflagefläche 7 mit den Keilen 7a und schwenken 9d der Abstützbalken 9c seitlich gegen die Last (Fig. 3);
6- Bewegen 7h der Keile 7a mit begrenztem Druck um abzutasten ob diese sich in exakter Position befinden um zwischen die Palette P und der Last L einzudringen ohne die Palette oder die Last zu beschädigen;
7- falls die Keile gegen die Palette P oder die Last L stoßen und daher wegen des begrenzten Drucks nicht eindringen, ist eine Korrektur der Einstellung 4v in vertikaler Richtung erforderlich;
8- falls die Keile 7a, trotz des begrenzten Drucks, sich bewegen, weil sie die exakte Position einnehmen, wird der Druck erhöht um das vollständige Endringen 7h und das Anheben Lv der vorderen Seite der Last L über die Höhe des Rückhalterandes P2 der Palette P zu bewirken;
9- Rückziehen 6v nach oben der beweglichen Anschläge 6d am Schubbalken 6a;
10- Bewegen 6h des Schubbalkens 6a um die Last L, bzw. den vorderen Teil L1, L2 der gruppierten Last L1-L4, über die Keile 7a und die Auflagefläche 7 gleitend zu schieben;
11- im Fall einer gruppierten Last L1-L4, Schieben 6h mittels Schubbalken 6a um den ersten Teil der Last L1, L2 auf das, nach der Auflagefläche 7 angeordnete, Förderband 8 und den zweiten Teil der Last L3, L4 auf die Auflagefläche 7 zu fördern;
12- Bewegen 8h des ersten Teiles der Last L1, L2 auf dem Förderband 8 um diesen vom zweiten Teil L3, L4 der Last auf der Auflagefläche 7 zu distanzieren (Fig. 7);
13- Verfahren 9h der Abstützeinheiten 9 entlang des Förderbandes und hinter den ersten Teil der Last L1, L2 und Schwenken 9d der Arme 9b um mit den Abstützbalken 9c gegen die Rückseite der Last L1, L2 zu wirken und diese längs der Strecke auf dem Förderband 8 zu begleiten;
14- Bewegen 9h der Abstützeinheiten 9 mit den gegen die Rückseite der ersten Last L1, L2 wirkenden Abstützbalken 9c um das Überwechseln auf das anschließende, zum Förderband 8 quer wirkende, Förderband 10 zu bewirken und/oder durch Wirken auf eine der vertikalen Eckbereiche der Last eine Rotation dieser um eine vertikale Achse zu erreichen, um durch Schieben in Querrichtung oder gegen eine der seitlichen Flächen der Last das Ausrichten der einzelnen gestapelten Teile der Last zu erreichen;
15- eventuelle Wiederholung der Arbeitsfasen von 11 bis 14 zwecks Verschieben des zweiten Teiles L3, L4 der Last von der Auflagefläche 7 auf das Transportband 8 und das Transportband 10;
16- Rückziehen 5v der Anschläge 5;
17- Abtransport 4h, 20h der freien Palette P;
18- Ausfahren 5v der Anschläge 5;
19- Zuführen 2h der nächsten beladenen Palette P.

## Patentansprüche

1. Schubdepalettierer für Paletten (P) mit Rückhalterand (P2) bestehend aus einem Rahmen (1b) welcher eine Positionierungsvorrichtung (A) mit Ladefläche (3) und mit Transfermitteln (4) für die Paletten (P) mit Einzellast (L) oder gruppierter Last (L1-L4) trägt, wobei die Paletten (P) quer zur nachfolgenden Depalettierbewegung (6h) zugeführt (2h) werden, aus einer nach der Positionierungsvorrichtung (A) angeordneten Anhebevorrichtung (B) umfassend eine Auflagefläche (7), aus einer Schubvorrichtung (C) umfassend einen Schubrahmen (6) mit Schubbalken (6a) und Stützrahmen (6b) welcher, mittels Motor (6m) längs seitlich am Rahmen (1b) des Depalettierers befestigten Führungen, über die Positionierungsvorrichtung (A) hinweg bewegt (6h) wird und aus einer Abstützvorrichtung (D) umfassend zwei Abstützeinheiten (9) welche je von einem Motor (9n) über Übertragungsmittel wie Zahnriemen (9f) entlang Führungen (9e) am Rahmen (1c) eines nach der Auflagefläche (7) angeordneten Transfermittels (8) bewegt (9h) werden, **dadurch gekennzeichnet dass** die Ladefläche (3) zusammen mit den entsprechenden Transfermitteln (4) der Positionierungsvorrichtung (A), bezogen auf den Rahmen (1b) des Depalettierers, mechanisch oder hydraulisch vertikal verstellbar (4v) ist und an der, der Zuführseite gegenüberliegenden, Seite mit vertikal bewegbaren (5v) Anschlägen (5) ausgestattet ist, dass die mit dem Rahmen (1b) verbundene Auflagefläche (7) der Anhebevorrichtung (B) mit mindestens zwei Keilen (7a) ausgestattet ist welche verfahrbar (7h) in Führungsrillen (7c) gelagert sind so dass ihre obere Fläche komplanar mit der Auflagefläche (7) ist und welche von Pneumatikzylinder oder mechanisch gegen die Depalettierrichtung (6h) bewegt werden und dass die Führungsschienen (9e) für die Abstützeinheiten (9) der Abstützvorrichtung (D) sich über die gesamte Länge in Richtung des Transfers (6h, 8h) der Last (L, L1-L4), der Auflagefläche (7) und des anschließenden Transfermittels (8) erstrecken.

2. Depalettierer gemäß Anspruch 1, **dadurch gekennzeichnet, dass** der Schubbalken (6a) der Schubvorrichtung (C) an beiden Endbereichen mit einem vertikal verstellbaren (6v) Anschlag (6d) ausgestattet ist.

3. Depalettierer gemäß Anspruch 1, **dadurch gekennzeichnet, dass** der Schubbalken (6a) der Schubvorrichtung (C) am Schubrahmen (6) vertikal verstellbar gelagert ist um in abgesenkter Position, während des Eindringens (7h) der Keile (7a) zwischen der Palette (P) und der Last (L) als Anschlag, sei es für die Palette (P) als auch für die Basis der Last (L, L1-L4), wirken zu können.

4. Depalettierer gemäß Anspruch 1, **dadurch gekennzeichnet, dass** die Ladefläche (3) der Positionierungsvorrichtung (A), im Bereich gegenüber dem Wirkungsbereich der Keile (7a), vertikal verstellbare Anschläge aufweist welche geeignet sind, in ausgefahrener Position die Palette (P), während des Eindringend (7h) der Keile (7a) der Anhebevorrichtung (B) zwischen der Palette (P) und der Last, zu blockieren.

5. Depalettierer gemäß Anspruch 1, **dadurch gekennzeichnet, dass** das vertikale Verstellen (4v) um die Ladefläche (3) für die Palette (P) in die Wirkungsebene der, auf der Auflagefläche (7) angeordneten, Keile (7a) zu bringen, nur von der Ladefläche (3) oder nur von den Transferorganen (4) der Positionierungsvorrichtung (A) ausgeführt wird.

6. Depalettierer gemäß Anspruch 1, **dadurch gekennzeichnet, dass** um mit den Keilen (7a) entsprechend der Ladefläche für die Palette (P) wirken (7h) zu können, die Ladefläche (3) und die Transferorgane (4) der Positionierungsvorrichtung (A) fest am Rahmen (1b) des Depalettierers befestigt sind, während die Auflagefläche (7) zusammen mit den Keilen (7a) vertikal verstellbar ist.

7. Depalettierer gemäß Anspruch 1, **dadurch gekennzeichnet, dass** die einzelnen Abstützeinheiten (9) aus einem Laufwagen (9a) bestehen welcher entlang, seitlich der mit Keilen (7a) versehenen Auflagefläche (7) und seitlich des Transfermittels (8) vorgesehene Führungrn (9e), mittels Riemen (9f) oder einem anderen von einem Motor (9n) angetriebenen Übertragungsmittel (9h) beweglich (9h) ist, dass an dem besagten Laufwagen (9a) ein Arm (9b), um eine vertikale Achse schwenkbar (9d) angelenkt ist welcher in den Durchlaufbereich der depalettierten Lasten (L, L1-L4) ragt und am freien Ende einen vertikalen Abstützbalken (9c) aufweist welcher höchstens eine, der maximalen Höhe der bearbeitbaren depalettierten Last, entsprechende Höhe aufweist.

8. Depalettierer gemäß der Ansprüche 1 und 7, **dadurch gekennzeichnet, dass** die Arme (9b), quer zur Depalettierrichtung (6h) über die Mittellinie der Ladefläche (7) mit den Keilen (7a) und des anschließenden Transfermittels (8) hinausragen.

9. Depalettierer gemäß der Ansprüche 1 und 7, **dadurch gekennzeichnet, dass** die Motoren (9n) der Abstützeinheiten (9) separat steuerbar sind so dass die depalettierten Lasten (L, L1-L4) längs der gesamten Strecke auf der mit Keilen (7a) ausgestatteten Auflagefläche (7) und/oder der Strecke auf dem Transfermittel (8) begleitet werden, indem eine Stützwirkung auf die, der entsprechenden Abstützeinheit (9) zugewandten Oberfläche oder, entsprechend der Transferrichtung (6h) auf der Auflagefläche (7) und/oder der Bewegung (8h) auf dem folgenden Transfermittel (10), auf die vordere oder hintere Oberfläche ausgeübt wird.

10. Depalettierer gemäß der Ansprüche 1 und 7, **dadurch gekennzeichnet dass** die einzelnen Abstützeinheiten (9) auf die vordere oder hintere Oberfläche der Last (L, L1-L4) einen Druck ausüben können um die Bewegung (8h) auf dem Transfermittel (8) zu beschleunigen, bzw. zu verlangsamen, wobei im Fall gestapelter Lasten das vertikale Ausrichten der einzelnen gestapelten Teile erreicht wird.

11. Depalettierer gemäß der Ansprüche 1 und 7, **dadurch gekennzeichnet, dass** das Ausrichten der einzelnen gestapelten Teile einer depalettierten Last (L, L1-L4) durch Wirken mit beiden Abstützbalken (9c) auf die sich gegenüberliegenden Oberflächen der selben Last erfolgt und dass das Wirken mit einem der Abstützbalken (9c) im Bereich einer der Kanten der Last diese in Drehung um eine vertikale Achse versetzt.

12. Verfahren zum depalettieren einer Last (L. L1-L4) von einer Palette (P) mit Rückhalterand (P2) mittels Schubdepalettierer bestehend aus einer Positionierungsvoirrichtung (A) mit Ladefläche (3) mit vertikal beweglichen (5v) Anschlägen (5) und Transfermittel (4) welcher auf einer Seite beladene Paletten (P) zugeführt (2h) werden während an der gegenüberliegenden Seite die entladenen Paletten (P) von Transfermitteln (2a) abgeführt (20h) werden, aus einer Anhebevorrichtung (B) mit einer mit Keilen (7a) versehenen Auflagefläche (7), aus einer Schubvorrichtung (C) mit Schubstange (6a) mit vertikal beweglichen (6v) Anschlägen (6d) und aus einer Abstützvorrichtung (D) mit zwei Abstützeinheiten (9) mit einem von Motor (9n), entlang seitlich an einer Auflagefläche (7) und am nachfolgenden Transfermittel (8) vorgesehenen Führungen (9f) bewegtem Laufwagen (9a), welcher einen um eine vertikale Achse schwenkbaren (9d) Arm (9b) aufweist welcher am Ende einen vertikalen Stützbalken (9c) trägt, **gekennzeichnet durch** die folgenden Arbeitsfasen:
1- Transfer (2h) der Palette (P) samt Last (L) in Richtung Positioniervorrichtung (A);
2- Transfer (4h) der Palette (P) samt Last (L) auf die Ladefläche (3) und Positionierung gegen die beweglichen (5v) ausgefahrenen Anschläge (5) welche als Endanschläge wirken;
3- Bewegen (6h) des Schubbalkens (6a) mit den ausgefahrenen beweglichen Anschlägen (6b) in Richtung Palette (P) mit Last, dabei ist der Schubbalken (6a) in einer Position knapp oberhalb der horizontalen Ebene welche sich über das obere Ende des Rückhalterandes (P2) der Palette (P) erstreckt so dass er gegen die Rückseite der Last (L) aufliegt während die ausgefahrenen Anschläge (6d) an der Palette (P) anliegen;
4- Einstellung in vertikaler Richtung durch Anheben/Absenken (4v) der Ladefläche (3), bzw. der Kettenförderer (4) oder beider Einrichtungen, um die Eindringkante der Keile (7a) in eine Position zu bringen welche der Ladefläche der Palette (P) entspricht;
5- Bewegen (9h) der beiden Abstützeinheiten (9) in Richtung seitlich zur Auflagefläche (7) mit den Keilen (7a) und Schwenken (9d) der Abstützbalken (9c) seitlich gegen die Last;
6- Bewegen (7h) der Keile (7a) mit begrenztem Druck um abzutasten ob diese sich in exakter Position befinden um zwischen die Palette (P) und der Last (L) einzudringen ohne die Palette oder die Last zu beschädigen;
7- falls die Keile gegen die Palette (P) oder die Last (L) stoßen und daher wegen des begrenzten Drucks nicht eindringen, ist eine Korrektur der Einstellung (4v) in vertikaler Richtung erforderlich;
8- falls die Keile (7a), trotz des begrenzten Drucks, sich bewegen, weil sie die exakte Position einnehmen, wird der Druck erhöht um das vollständige Endringen (7h) und das Anheben (Lv) der vorderen Seite der Last (L) über die Höhe des Rückhalterandes (P2) der Palette (P) zu bewirken;
9- Rückziehen (6v) der beweglichen Anschläge (6d) am Schubbalken (6a);
10- Bewegen (6h) des Schubbalkens (6a) um die Last (L), bzw. den vorderen Teil (L1, L2) der gruppierten Last (L1-L4), über die Keile (7a) und die Auflagefläche (7) gleitend zu schieben;
11- im Fall einer gruppierten Last (L1-L4), Schieben (6h) mittels Schubbalken (6a) um den ersten Teil der Last (L1, L2) auf das, nach der Auflagefläche (7) angeordnete, Förderband (8) und den zweiten Teil der Last (L3, L4) auf die Auflagefläche (7) zu fördern;
12- Bewegen (8h) des ersten Teiles der Last (L1, L2) auf dem Förderband (8) um diesen vom zweiten Teil (L3, L4) der Last auf der Auflagefläche (7) zu distanzieren;
13- Verfahren (9h) der Abstützeinheiten (9) entlang des Förderbandes und hinter den ersten Teil der Last (L1, L2) und Schwenken (9d) der Arme (9b) um mit dem Abstützbalken (9c) gegen die Rückseite der Last (L1, L2) zu wirken und diese längs der Strecke auf dem Förderband (8z9 zu begleiten;
14- Bewegen (9h) der Abstützeinheiten (9) mit den gegen die Rückseite der ersten Last (L1, L2) wirkenden Abstützbalken (9c) um das Überwechseln auf das anschließende, zum Förderband (8) quer wirkende, Förderband (10) zu bewirken und/oder durch Wirken auf eine der vertikalen Eckbereiche der Last eine Rotation dieser um eine vertikale Achse zu erreichen, um durch Schieben in Querrichtung oder gegen eine der seitlichen Flächen der Last das Ausrichten der einzelnen gestapelten Teile der Last zu erreichen;
15 - eventuelle Wiederholung der Arbeitsfasen von 11 bis 14 zwecks Verschieben des zweiten Teiles (L3, L4) der Last von der Auflagefläche (7) auf das Transportband (8) und das Transportband (10);
16- Rückziehen (5v) der Anschläge (5);
17- Abtransport (4h, 20h) der freien Palette (P);
18- Ausfahren (5v) der Anschläge (5);
19- Zuführen (2h) der nächsten beladenen Palette (P).
